# EUROPEAN PATENT APPLICATION

(11) **EP 0 974 904 A1**
(43) Date of publication of application: **26.01.2000**
(21) Application number: 99401830.7
(22) Date of filing: 21.07.1999
(51) Int. Cl.: G06F 11/14

(54) **Automatic personal computer shutdown apparatus and method**

(30) Priority: 23.07.1998 JP 20830698
(71) Applicant: NTT Power and Building Facilities Inc., Tokyo (JP)
(72) Inventor: Murao, Tetsuro, c/o NTT Power & Bld. Fac. Inc., Tokyo (JP); Kawagoe, Yuji, c/o NTT Power & Bld. Fac. Inc., Tokyo (JP)
(74) Representative: Signore, Robert

(57) **Abstract**

An apparatus and method are presented that provide low energy consumption of a personal computer in an inactive state.

In an automatic shutdown apparatus for a personal computer having a monitoring means (2) that monitors the active state of a personal computer, a time measurement means (3) that starts the time measurement when an inactive state is detected and ends the time measurement when an active state is detected, a setting means (1) that sets the measurement expiration time for the time, a detection means (6) that detects whether or not the measurement time agrees with the measurement expiration time, and a control means (9) that shuts down the personal computer when agreement is detected, and wherein after saving files in use and terminating processing of active files, the personal computer is shut down.

## Description

### BACKGROUND OF THE INVENTION

### Field of the Invention

The present invention relates to an apparatus and a method for automatically and safely shutting down a personal computer.

### Background of the Invention

Recently, accompanying the development of multimedia technology, large numbers of personal computers have been introduced into homes and companies. As said introduction progresses, the amount of electrical power consumed by personal computers is increasing.

Thus, in order to design a personal computer having a low energy consumption while the power is on but the computer is inactive, operating systems and hardware having functions such as low energy modes have been proposed.

However, even though the energy use in the low electricity consumption mode is low, it is actually consumed, and considering the total energy consumption of numerous personal computers, further reduction in energy consumption is required. In order achieve said, the energy supply of inactive personal computers must be cut off completely. However, said operation of cutting off the energy supply is in fact rarely carried out because it is troublesome.

### SUMMARY OF THE INVENTION

In consideration of the above-described problem, the present invention has as an object providing an apparatus and method that reduces further than conventionally the energy consumption of personal computers in an inactive state.

The first aspect of the present invention is an automatic personal computer shutdown apparatus having a monitoring means that monitors the active state of the personal computer, a time measuring means that starts time measurement under the condition that an inactive state has been detected by the monitoring means and stops the time measurement under the condition that an active state has been detected, a setting means that sets the measurement expiration time of this time measuring means, a detection means that detects whether or not the time measurement by this time measuring means agrees with this measurement expiration time, a control means that executes a sequential flow in order to shut down a personal computer under the condition that agreement is detected by this detection means, and wherein this control means shuts down the personal computer after saving the files in use and the terminating processing of the active application programs.

The second aspect of the present invention is an automatic personal computer shutdown apparatus having a clock means that detects the present date and time, a setting means that sets the date and time when the personal computer is to shut down, a detection means that detects whether or not the present date and time agree with the date and time set by this setting means, and a control means that executes a sequential flow in order to shut down the personal computer under the condition that agreement is detected by this detection means, wherein this control means shuts down the personal computer after saving the files in use and the terminating processing of the active application programs.

The third aspect of the present invention is an automatic personal computer shutdown apparatus according to Claim 1 and Claim 2 wherein this control means executes a flow sequence in order to shut down a personal computer after outputting a warning signal to a warning means that generates an prior warning of the shutdown.

The fourth aspect of the present invention is an automatic personal computer shutdown apparatus according to Claim 3 wherein this control means inputs a set value from a delay time setting means that sets the time from this prior warning until executing the shutdown.

The fifth aspect of the present invention is an automatic personal computer shutdown apparatus according to Claim 3 and Claim 4 wherein this control means carries out a flow sequence in order to shut down a personal computer under the condition that a command to stop is not issued after the warning means has generated an prior warning.

The sixth aspect of the present invention is an automatic personal computer shutdown method that monitors the active state of the personal computer, initiates time measurement under the condition that an inactive state has been detected, stops the time measurement under the condition that an active state has been detected, sets a measurement expiration time in this time measurement, detects whether or not the measurement time in this time measurement agrees with this measurement expiration time, and executes a flow sequence in order to shutdown a personal computer under the condition that an agreement is detected, wherein the personal computer is shutdown after saving active files and carrying out termination processing of active applications under the condition that this agreement has been detected.

The seventh aspect of the present invention is an automatic personal computer shutdown method that detects the present date and time, sets the date and time when the personal computer is to shutdown, detects whether or not the present date and time agree with the set date and time, and carries out a flow sequence in order to shut down a personal computer under the condition that this agreement has been detected, wherein the personal computer is shutdown after saving active files and carrying out termination processing of active applications under the condition that this agreement has been detected.

### BRIEF DESCRIPTION OF THE DRAWINGS

Fig. 1 is a diagram showing the structure of the present invention.

Fig. 2 is a flowchart showing the processing of the shutdown function.

Fig. 3 is a flowchart showing the processing of the alarm function.

Fig. 4 is a flowchart showing the processing of the AP termination function.

### DETAILED DESCRIPTION OF THE INVENTION

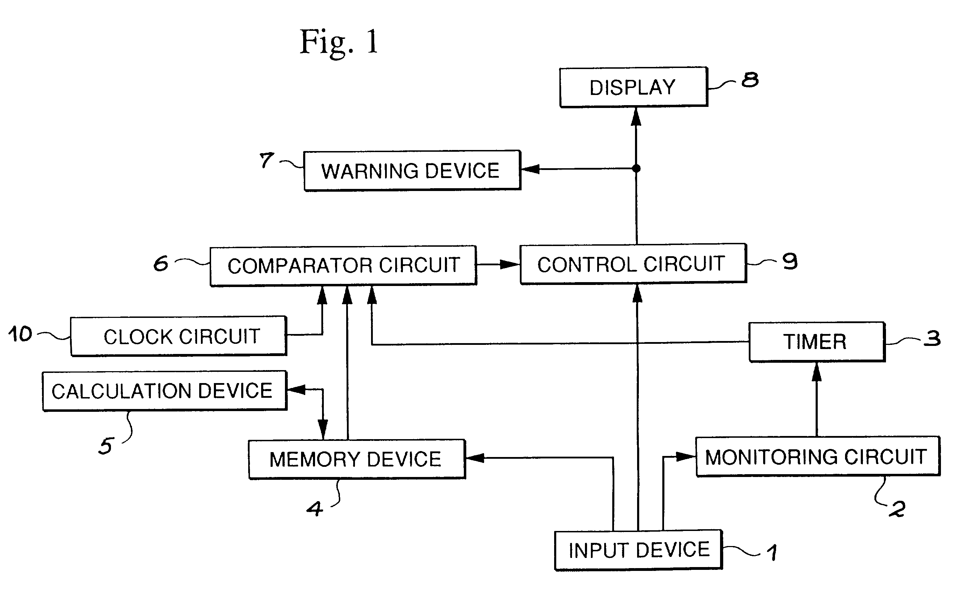

The structure of the personal computer which is the embodiment of the present invention is explained referring to Fig. 1. In this figure, reference numeral 1 is an input device, such as a keyboard or mouse. Various input are input from this input device 1. The monitor circuit 2 monitors the input from this input device 1. When input is detected, it outputs a reset signal. This reset signal is input into the timer 3, and the time measurement value of this timer 3 is reset.

From the input device 1, the setting values of the expiration time, the delay time, and the designated date and time are also input. Here, the expiration time is the time when the inactive time of the personal computer expires, and when the inactive time reaches the expiration time while the low energy mode is selected, the personal computer is shut down. Moreover, the inactive time is the time during which there is no input from the input device while the power of the personal computer is turned on. Additionally, the delay time is the amount of time that the warning is generated before the shutdown is executed preceding the time of the execution of the shutdown. In addition, the designated date and time are the date and time at which the shutdown will be executed, and is designated by the user. The user sets as the designated date and time the anticipated date and time that the use of the personal computer will be finished. These setting values are stored in the memory device 4.

The calculation circuit 5 subtracts the delay time from the expiration time to calculates the warning time. In addition, it subtracts the delay time from the designated date and time to calculates the warning date and time. These warning times and warning dates and times are stored in the memory device 4.

The comparator circuit 6 compares the calculated warning time and the counted inactive time counted by the timer 3, and outputs a warning signal when they agree. Or it compares the calculated warning date and time with the present date and time detected by the clock circuit 10, and outputs a warning signal when they agree. These warning signals are input into the control circuit 9. The control circuit 9 outputs a warning activation signal to the warning device 7 and the display 8. The warning device 7 is composed of a buzzer or speaker. When the warning activation signal is input, the warning device 7 generates a warning sound, and shows a warning display on the display 8.

When the user hears or sees this warning and wishes to terminate the shutdown, an input indicating the termination is input from the input device 1. This input is input into the control circuit 9. The control circuit 9 terminates the shutdown due to this input. Moreover, after the warning has been generated, if the personal computer is still not used by the user, the warning will continue to be generated.

The comparator circuit 6 compares the set expiration time and the accumulated inactive time, and when they agree, outputs an agreement signal. Or, it compares the set designated date and time and the present date and time, and outputs an agreement signal when they agree. These agreement signals are sent to the control circuit 9. This control circuit 9 initiates the shutdown when the agreement signal is input.

Next, the operation of the present embodiment will be explained. In a personal computer having the automatic shutdown apparatus of the present invention built in, the power saving mode is selected by the input from an input device such as a keyboard or mouse.

First, the case will be explained when an expiration time and a delay time are input from the input device 1 when power saving mode is selected. The expiration time and the delay time input form the input device 1 are stored in the memory device 4. In addition, when these values are input, the delay time is subtracted from the expiration time by the calculation circuit, and the warning time from the initiation of the inactive state to the generation of the warning is calculated. This warning time is also stored in the memory device 4.

When the power saving mode is selected, the processing flow of the shutdown function shown in Fig. 1 is executed. In this flow, first the shutdown stand-by loop is started. In the alarm function of the next step, the inactive state continues, and as the shutdown time approaches, if the inactive time reaches the warning time, the prior warning is generated. If the warning time is not reached, nothing happens.

Next, the set expiration time and the inactive time calculated by the timer are compared by the comparator circuit 6, and if they agree, the processing moves to the AP termination function shown in the figure. If they do not agree, the processing returns to the shutdown stand-by loop, and the shutdown stand-by loop is repeated.

When the monitor circuit 2 detects an input from the input device 1 of the personal computer, this monitor circuit 2 outputs a reset signal. The timer 3 is reset by this reset signal, and the calculation of the inactive time is re-started from zero. Thus, if there is any input to the input device 1 before the inactive time reaches the warning time, the warning is not generated. In addition, if the input to the input device 1 is before the inactive time reaches the expiration time, the shutdown stand-by time continues to repeat, and no shutdown in carried out.

If the inactive time calculated by the timer reaches the expiration time, the processing proceeds to the AP termination function shown in the figure. Here, files that are presently in use are saved, and active applications are terminated.

Next, the OS of the personal computer terminates in a normal sequence, and last, the electrical source of the personal computer is turned off in a normal sequence.

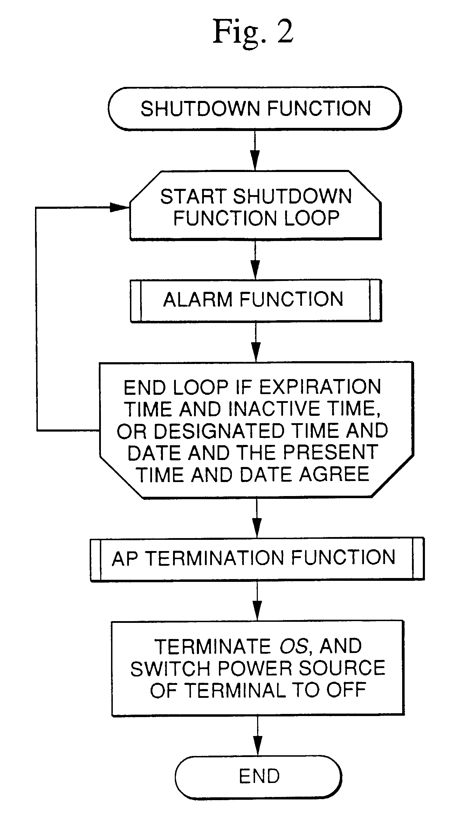

Fig. 2 shows the detailed flow of the steps of the alarm function shown in Fig. 1. In this flow, when the expiration time is near, a warning is generated, and an unexpected shutdown is prevented. As already described, the warning time calculated by subtracting the delay time from the expiration time is stored in the memory device 4. This warning time is compared to the value of the inactive time calculated by the timer, and when they both agree, the warning sound is generated by the warning device 7, and the warning display is shown in the display 8. When they do not agree, the warning sound is not generated, and no warning is displayed.

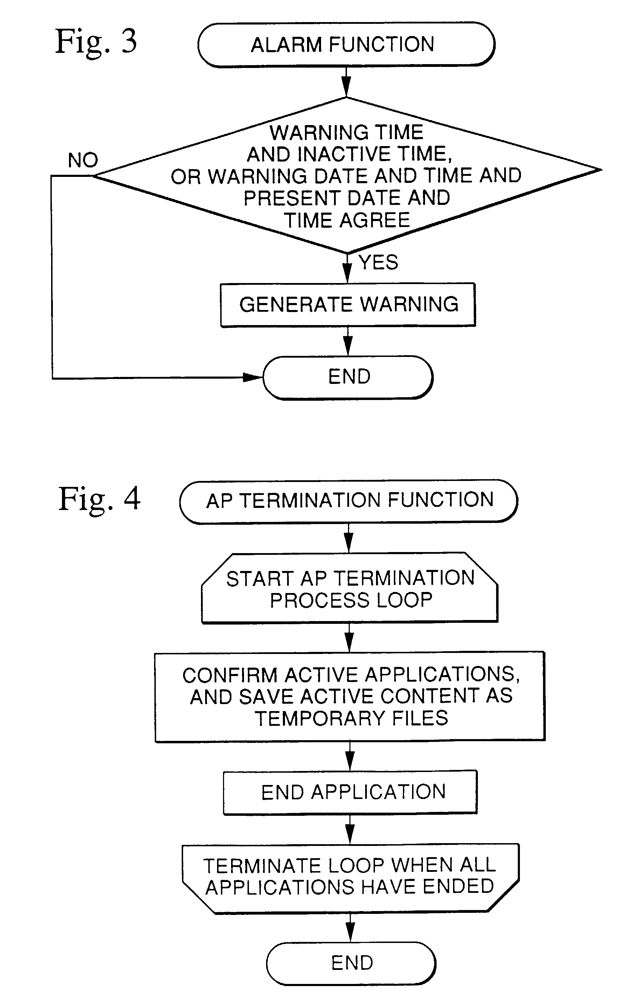

Fig. 3 shows the detailed flow of the steps of the AP termination function shown in Fig. 1. In this flow, first the applications presently active are confirmed by the control circuit 9. Next, the files in use that have been opened by these applications are saved as temporary files in a holder set by properties in the hard disk in the memory device. In addition, the active applications are terminated in a normal sequence.

Next, the operation wherein the designated date and time and the delay time are input from the input device 1 is explained when the power saving mode is set. The designated time and date and the delay time are stored in the memory device 4. In addition, when these values are input, the delay time is subtracted from the designated date and time by the calculation circuit 5, and the warning date and time at which the warning is generated is calculated. This warning date and time are also stored in the memory device 4.

When the power saving mode is selected, the processing flow of the shutdown function shown in Fig. 2 is executed. The shutdown stand-by loop is initiated, and in the alarm function, the date and time of the shutdown becomes near. When the set warning date and time are reached, the prior warning is generated. If the warning date and time are not reached, nothing happens.

Next, the set designated date and time are compared with the present date and time detected by the clock circuit 10, and when they agree, the processing proceeds to the AP termination function shown in the figure. When they do not agree, the processing returns to the shutdown stand-by loop start, and this standby loop in repeated.

When the present date and time reach the designated date and time, the processing proceeds to the AP termination function shown in the figure, and the files presently in use are saved, and the active applications are terminated. In addition, the OS of the personal computer terminates in the normal sequence, and finally the electricity source of the personal computer is turned off in the normal sequence.

In the detailed flow of the steps of the alarm function shown in Fig. 3, when the designated date and time are near, the warning is generated, and an unexpected shutdown is prevented. That is, the warning date and time, which is the delay time subtracted from the designated date and time stored in the memory device 4, and the present date and time according to the clock circuit 10 are compared by the comparator circuit 6, and when both agree, the warning sound is sounded by the warning device 7, and the warning display is shown in the display 8. When they do not agree, the warning display is not shown.

Moreover, the operation of the detailed flow of the steps of the AP termination function shown in Fig. 4 is the same as the case wherein the expiration time and the delay time are input when the power saving mode is selected, and its explanation has been omitted.

Because the present invention is an automatic personal computer shutdown apparatus comprising a monitoring means that monitors the active state of the personal computer, a time measuring means that starts time measurement under the condition that an inactive state has been detected by this monitoring means and stops the time measurement under the condition that an active state has been detected, a setting means that sets the measurement expiration time of this time measuring means, a detection means that detects whether or not the time measurement by this time measuring means agrees with this measurement expiration time, a control means that executes a sequential flow in order to shut down a personal computer under the condition that agreement is detected by this detection means, and wherein in this control means shuts down the personal computer after saving the files in use and the terminating processing of the active application programs, it is possible to decrease greatly the amount of energy consumption in a personal computer that has been left in an inactive state because the shutdown of the personal computer is executed without damaging the files in use and the active applications, safely, and automatically.

In addition, because the present invention is an automatic personal computer shutdown apparatus comprising a clock means that detects the present date and time, a setting means that sets the date and time when the personal computer is to shut down, a detection means that detects whether or not the present date and time agree with the date and time set by this setting means, and a control means that executes a sequential flow in order to shut down the personal computer under the condition that agreement is detected by this detection means, and wherein this control means shuts down the personal computer after saving the files in use and the terminating processing of the active application programs, it is possible to decrease greatly the amount of energy consumption because the shutdown of the personal computer is executed without damaging the files in use and the active applications, safely, and automatically at the date and time designated by the user.

In addition, there are no sudden executions of the shutdown not desired by the user because the control means executes a flow sequence in order to shut down a personal computer after outputting a warning signal to a warning means that generates an prior warning of the shutdown under the condition that this agreement is detected.

In addition, it is possible to set the delay time to the time suitable to the conditions of use of the personal computer because the control means inputs a set value from a delay time setting means that sets the time from this warning until executing the shutdown.

In addition, it is possible to terminate shutdowns that the user does not desire because the control means carries out a flow sequence in order to shut down a personal computer under the condition that a command to stop is not issued after the warning means has issued an prior warning.

## Claims

1. An automatic personal computer shutdown apparatus comprising:
a monitoring means for monitoring the active or inactive state of the personal computer;
a time measuring means for starting time measurement under the condition that an inactive state has been detected by said monitoring means and for stopping the time measurement under the condition that an active state has been detected;
a setting means for setting the measurement expiration time of said time measuring means;
a detection means for detecting whether or not the time measurement by said time measuring means agrees with the measurement expiration time;
a control means for executing a sequential flow in order to shut down a personal computer under the condition that agreement is detected by said detection means;
wherein said control means shuts down the personal computer after saving the files in use and after executing the terminating processing of the active application programs.

2. An automatic personal computer shutdown apparatus having:
a clock means for detecting the present date and time;
a setting means for setting the date and time when the personal computer is to shut down;
a detection means for detecting whether or not the present date and time agree with the date and time set by said setting means; and
a control means that executes a sequential flow in order to shut down the personal computer under the condition that agreement is detected by this detection means;
wherein said control means shuts down the personal computer after saving the files in use and the terminating processing of the active application programs.

3. An automatic personal computer shutdown apparatus according to any one of claims 1 and 2, wherein said control means executes a flow sequence in order to shut down a personal computer after outputting a warning signal to a warning means that generates an prior warning of the shutdown under the condition that said agreement is detected.

4. An automatic personal computer shutdown apparatus according to claim 3, wherein said control means inputs a set value from a delay time setting means for setting the time from said prior warning until executing the shutdown.

5. An automatic personal computer shutdown apparatus according to any one of claims 3 and 4, wherein said control means carries out a flow sequence in order to shut down a personal computer under the condition that a command to terminate the shut down is not issued after the warning means has generated a prior warning.

6. An automatic personal computer shutdown method comprising the steps of:
monitoring the active state of the personal computer;
initiating time measurement under the condition that an inactive state has been detected, and stopping the time measurement under the condition that the active state has been detected;
setting a measurement expiration time in said time measurement;
detecting whether or not the measurement time in said time measurement agrees with said measurement expiration time; and
executing a flow sequence in order to shutdown a personal computer under the condition that an agreement is detected; wherein,
the personal computer is shut down after saving active files and carrying out termination processing of active applications under the condition that said agreement has been detected.

7. An automatic personal computer shutdown method comprising the steps of:
detecting the present date and time;
setting the date and time when the personal computer is to shutdown;
detecting whether or not the present date and time agree with the set date and time; and
carrying out a flow sequence in order to shut down a personal computer under the condition that said agreement has been detected; wherein
the personal computer is shutdown after saving active files and carrying out termination processing of active applications under the condition that said agreement has been detected.
